# FASCICULE DE BREVET EUROPEEN

(11) **EP 0 687 976 B1**
(45) Date de publication et mention de la délivrance du brevet: **06.05.1998**
(21) Numéro de dépôt: 95401353.8
(22) Date de dépôt: 12.06.1995
(51) Int. Cl.: G06F 11/16

(54) **Unité de calcul à pluralité de calculateurs redondants**
Rechenwerkeinheit mit mehreren redundanten Rechnern
Computer unit with a plurality of redundant computers

(30) Priorité: 14.06.1994 FR 9407251
(43) Date de publication de la demande: 20.12.1995
(73) Titulaire: COMMISSARIAT A L'ENERGIE ATOMIQUE, 75015 Paris Cédex 15 (FR)
(72) Inventeur: Galy, Richard, F-94220 Charenton (FR); Giraud, Alain, F-91400 Orsay (FR)
(74) Mandataire: Dubois-Chabert, Guy

(56) Documents cités:
- FR-A- 2 346 772
- US-A- 3 829 668
- US-A- 3 898 621
- US-A- 5 136 704
- US-A- 5 287 361

## Description

### Domaine technique

La présente invention concerne une unité de calcul à pluralité de calculateurs redondants et en particulier une unité présentant une structure à deux branches, dite duplex, à masquage de faute. De telles unités de calcul sont utilisables notamment dans des dispositifs embarqués pour des milieux hostiles et plus précisément des milieux irradiés. Des applications sont envisageables dans les domaines spatial, militaire, nucléaire, mais aussi dans les domaines aéronautique ou ferroviaire par exemple.

### Etat de la technique antérieure

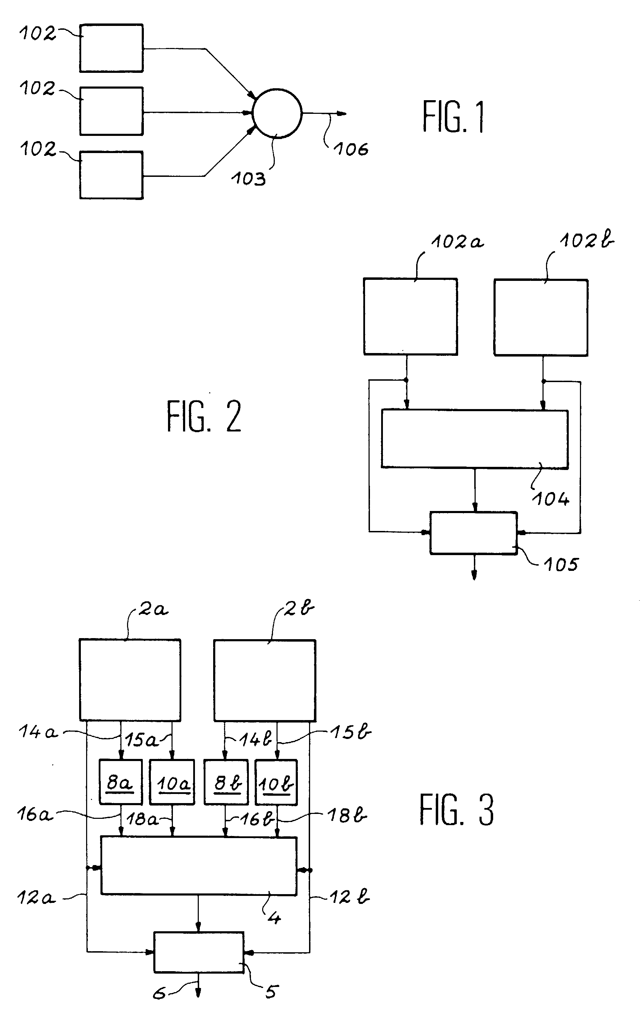

Les unités de calcul connues peuvent être configurées selon plusieurs types d'architecture différents. Toutefois, une architecture à trois branches telle qu'illustrée à la figure 1 est très répandue. L'unité de calcul comporte trois modules de calculateur redondants (TMR) repérés avec la référence 102. Ces calculateurs qui fonctionnent en parallèle effectuent le même travail et fournissent leurs résultats à un voteur 103. Le voteur 103 envoie vers une sortie 106 les données provenant par exemple de l'un des calculateurs lorsque les résultats sont identiques. En raison de l'imparité des calculateurs, il est possible toutefois d'effectuer un choix des données à diriger vers la sortie en cas de résultats divergents de l'un des calculateurs. Par exemple, il est possible d'envoyer les résultats de deux calculateurs concordants seulement.

Une unité de calcul TMR est de conception simple et s'avère d'un fonctionnement efficace. Une faute de l'un des calculateurs à la suite d'une perturbation est masquée puisque le voteur choisit alors de transmettre les résultats des deux autres calculateurs convergents.

Cependant, une unité de calcul selon une architecture à trois branches, c'est-à-dire avec trois calculateurs n'est pas toujours compatible avec les exigences de faible encombrement, de faible consommation, mais aussi de coût réduit, imposées par les applications embarquées envisagées.

La figure 2 montre une unité de calcul configurée selon une architecture à deux branches. Elle comporte seulement deux calculateurs 102a, 102b redondants qui sont reliés à un comparateur 104 et à un multiplexeur 105.

Une telle unité a par rapport à l'unité à trois branches l'avantage important d'être économique en consommation en place et en coût du fait de son nombre réduit de calculateurs.

Les deux calculateurs, qui fonctionnent en parallèle font le même travail et fournissent leurs résultats à un comparateur qui détermine s'il y a une différence entre les deux calculs. Il en informe ensuite le multiplexeur qui ne présente sur sa sortie le résultat que s'il y a équivalence entre les deux calculs. Sinon, le multiplexeur ne présente rien. Ainsi, il suffit que l'un des calculateurs ne fonctionne pas correctement pour que l'unité de calcul soit inopérante : une telle unité est donc, a priori, peu disponible, a fortiori en un lieu hostile.

Pour augmenter la disponibilité de l'unité de calcul, des moyens de contrôle de bon fonctionnement des calculateurs permettent au multiplexeur de délivrer les données du calculateur dont le bon fonctionnement a été vérifié par ces moyens de contrôle, comme l'illustre le brevet US-A-5 136 704.

Un but de l'invention est de proposer notamment une unité de calcul avec une structure à deux branches, de type duplex, c'est-à-dire avec seulement deux calculateurs, et capable de prendre des décisions donc de fonctionner de façon fiable, notamment dans un milieu hostile, tel qu'un milieu irradié, par exemple.

De manière plus générale un but de l'invention est de fournir une unité de calcul tolérante qui comporte, pour une structure donnée, un minimum de composants et qui soit particulièrement adaptée à une consommation électrique réduite.

Un autre but est également d'obtenir une structure simple, d'un coût de fabrication et d'un encombrement réduits.

Ces buts sont atteints par le dispositif comme décrit dans la revendication indépendante 1.

### Exposé de l'invention

Pour atteindre les objectifs mentionnés ci-dessus, l'invention se rapporte plus précisément à une unité de calcul comportant deux calculateurs redondants capables d'exécuter indépendamment des tâches de calcul identiques et de fournir chacun des données de calcul à un comparateur, et un multiplexeur, piloté par le comparateur pour transmettre vers une sortie les données de calcul d'au moins un des calculateurs lorsque le comparateur relève une identité des données de calcul provenant de chaque calculateur, caractérisée en ce que l'unité de calcul comporte en outre des moyens de contrôle du bon fonctionnement de chaque calculateur, le multiplexeur étant capable de délivrer vers une sortie les données de calcul d'un calculateur dont le bon fonctionnement est vérifié par les moyens de contrôle lorsque le comparateur relève une différence dans les résultats de calcul provenant respectivement de chaque calculateur ; et en ce que chaque calculateur comporte une pluralité de microcontrôleurs fonctionnant tour à tour.

On entend par données de calcul un ou plusieurs résultats de calcul que chaque calculateur fournit au comparateur et au multiplexeur.

Selon un aspect de l'invention, les moyens de contrôle du bon fonctionnement comportent pour chaque calculateur un système dit "testeur de vie" et un système dit "testeur de cohérence".

On entend par "testeur de vie" d'un calculateur, un système qui est chargé de déterminer si ce calculateur est en état de fonctionnement. Ce testeur peut être par exemple une temporisation que le calculateur doit sans arrêt relancer sous peine que le testeur en déduise que le calculateur ne fonctionne plus.

Le testeur de cohérence est un système chargé de faire une analyse élaborée de données de chaque calculateur. Par exemple, chaque calculateur peut envoyer au testeur un mot dont les bits de poids forts sont le résultat d'une transformation mathématique des bits de poids faibles (ou le contraire). Une unité logique simple vérifie alors si les transformations mathématiques ont bien été exécutées par le calculateur.

Un test de cohérence peut par exemple consister à faire présenter par chaque calculateur une donnée dont les bits de poids fort sont le complément des bits de poids faible.

Selon un aspect avantageux de l'invention, le test de cohérence peut être réalisé en plusieurs étapes à différents endroits du déroulement du programme de chaque calculateur.

Pour effectuer le test, le testeur de cohérence peut comporter par exemple un ensemble de portes logiques.

Ainsi, dans le cas d'une structure à deux branches, avec deux calculateurs et, après l'exécution d'un calcul, chaque calculateur présente une donnée sur le comparateur. Si les deux données sont identiques, le comparateur ordonne au multiplexeur de présenter sur sa sortie une des deux données.

Si les deux données sont différentes, le comparateur lit l'information que lui fournit chaque testeur de vie. Si un testeur de vie n'est, par exemple, pas rafraîchi régulièrement par son calculateur, le comparateur en déduit que ce dernier est en panne et considère que les données de l'autre calculateur sont justes. Il donne alors l'ordre au multiplexeur de présenter sur sa sortie les données du calculateur considérées comme justes.

Si les deux données sont différentes et les deux testeurs de vie rafraîchis, le comparateur va lire les informations que lui fournissent les testeurs de cohérence. Si le test d'un calculateur est incohérent, le comparateur en déduit que l'autre calculateur a raison. Il donne alors l'ordre au multiplexeur de présenter son information sur sa sortie.

Un cas peut être litigieux, celui où les données sont différentes et les tests des moyens de contrôle vérifiés. Cependant, si l'on prend soin de programmer ces deux tests à des endroits bien différents du logiciel, il y a très peu de chance pour que ces trois conditions soient réunies ; le risque d'apparition de ce cas dépend directement de la qualité de programmation du testeur de cohérence ; il peut donc être minimisé.

Selon un aspect avantageux de l'invention, chaque calculateur comporte une pluralité de microcontrôleurs fonctionnant tour à tour.

Il s'avère en effet que les composants des microcontrôleurs et particulièrement des composants du type MOS soumis à des rayonnements, mais hors tension, peuvent récupérer, au moins en partie, leurs caractéristiques initiales après avoir été dégradés lorsqu'ils étaient sous tension.

Selon un autre aspect de l'invention, chaque microcontrôleur peut être associé à un système de surveillance capable de mettre sous tension le microcontrôleur de façon périodique et en alternance avec les autres microcontrôleurs. Le système de surveillance peut aussi vérifier le fonctionnement du microcontrôleur et le mettre hors tension lorsque celui-ci présente des défaillances de fonctionnement.

D'autres caractéristiques et avantages de l'invention ressortiront de la description des figures annexées.

### Brève description des figures

- la figure 1, déjà décrite, est une représentation schématique simplifiée d'une unité de calcul d'un type connu et réalisée selon une architecture à trois branches,
- la figure 2, déjà décrite, est une représentation schématique simplifiée d'une unité de calcul, comme réalisée selon une architecture à deux branches,
- la figure 3 est une représentation schématique simplifiée d'une unité de calcul selon une architecture à deux branches conformément à l'invention,
- la figure 4 est une représentation schématique plus détaillée d'une unité de calcul selon une architecture à deux branches, conformément à l'invention.

### Description détaillée de modes de réalisation de l'invention

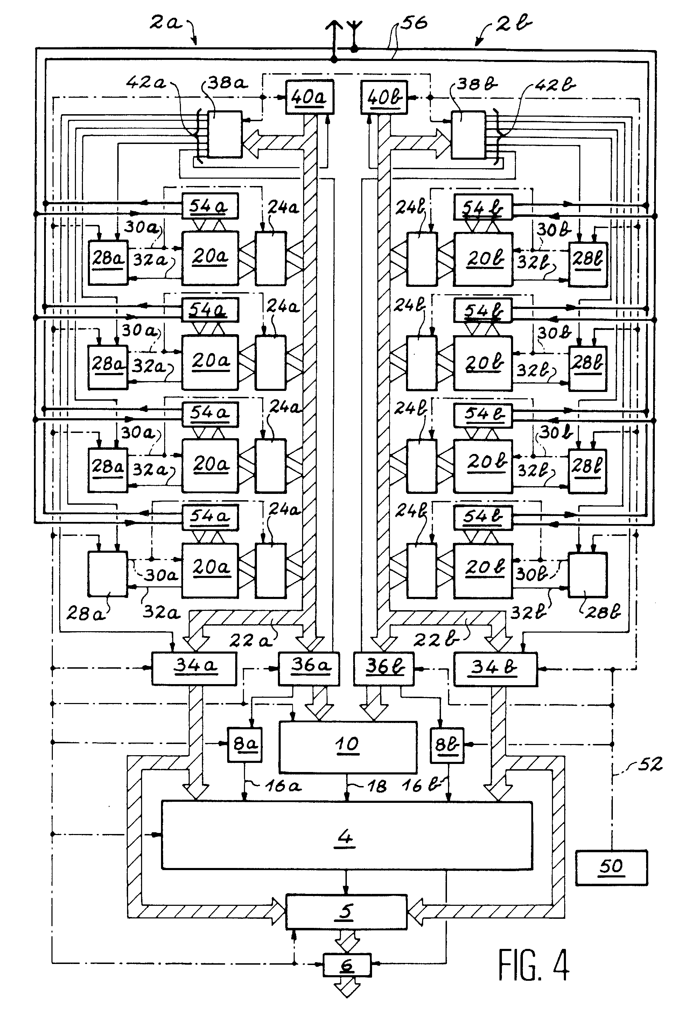

L'unité de calcul de la figure 3 comporte deux calculateurs 2a et 2b redondants qui fonctionnent en parallèle et effectuent les mêmes tâches de calcul.

Ces calculateurs correspondent à deux branches dans l'architecture générale de l'unité de calcul.

Un comparateur 4 reçoit les résultats de calcul des calculateurs 2a et 2b, et pilote un multiplexeur 5 qui transmet vers une sortie 6 le ou les résultats de calcul de l'un des calculateurs lorsque ces résultats sont estimés justes par le comparateur.

Pour établir la justesse des résultats de calcul, le comparateur effectue une comparaison des résultats des deux calculateurs et vérifie leur coïncidence. A ce sujet, les calculateurs 2a, 2b peuvent éventuellement opérer selon des programmes ou des algorithmes différents pour améliorer la pertinence de la comparaison.

Si une coïncidence est vérifiée alors, comme décrit plus haut, les résultats des deux calculateurs sont estimés corrects et sont transmis par le multiplexeur 5 vers la sortie 6.

Si la coïncidence des résultats n'est pas vérifiée, les moyens de comparaison disposent de moyens de contrôle du bon fonctionnement des calculateurs pour déterminer lequel est susceptible de fournir des résultats justes.

Dans l'exemple de la figure 3, ces moyens de contrôle comportent des moyens 8a, 8b dits "testeur de vie" prévus pour vérifier l'état de fonctionnement de chaque calculateur et des moyens 10a, 10b, dits "testeur de cohérence".

Pour des raisons de simplification, on utilise pour tous les éléments redondants de l'unité de calcul, des références numériques identiques suivies des lettres a ou b respectivement pour chaque calculateur.

Les calculateurs sont reliés d'une part au comparateur et au multiplexeur par des liaisons 12a, 12b et d'autre part aux moyens de contrôle par des liaisons 14a, 14b, 15a, 15b. Les liaisons 16a, 16b, 18a, 18b relient respectivement les moyens "testeur de vie" et "testeur de cohérence" au comparateur.

La figure 3 montre ainsi l'architecture générale à deux branches pour une unité de calcul conforme à l'invention.

La figure 4, qui montre plus en détail différents aspects d'une réalisation particulière d'un tel calculateur, comporte des références identiques pour les éléments déjà décrits pour la figure 3.

Chaque calculateur 2a, 2b comporte quatre microcontrôleurs 20a, 20b identiques qui fonctionnent tour à tour pour prolonger leur fonctionnement sous irradiation. Ils sont montés en parallèle sur des bus 22a, 22b respectivement par l'intermédiaire d'interfaces 24a, 24b.

Chaque microcontrôleur est équipé d'un système de surveillance 28a, 28b dit "chien de garde". Ce système est chargé de vérifier que le microcontrôleur est en fonctionnement. Il comporte une temporisation que les microcontrôleurs 20a et 20b doivent relancer suffisamment souvent pour que le chien de garde n'en déduise pas qu'il est en panne. Il est associé ici à une alimentation de type alimentation commutée, fournissant l'énergie nécessaire au fonctionnement du microcontrôleur. Ainsi, si le microcontrôleur tombe en panne et ne rafraîchit plus son "chien de garde", celui-ci se charge de couper l'alimentation.

L'alimentation commutée en énergie est représentée pour chaque microcontrôleur par une flèche 30a respectivement 30b. Les flèches 32a, 32b représentent le rafraîchissement de la temporisation du système 28a, 28b que doit effectuer périodiquement chaque microcontrôleur 20a, 20b.

Dans chaque calculateur au moins un des microcontrôleurs est sous tension et transmet sur le bus 22a, 22b respectivement des données. Ces données sont dirigées via le bus 22a, 22b respectivement à un registre de données 34a, 34b, à un registre de test 36a, 36b et à un dispositif de décodage d'adresses 38a, 38b dit décodeur d'adresses.

Le décodeur d'adresses 38a, 38b de chaque calculateur 2a, 2b est relié à chaque registre 34a, 34b, 36a, 36b ainsi qu'à une mémoire 40a, 40b et aux alimentations commutées.

Ces liaisons sont de façon non détaillée représentées par des ensembles de flèches 42a, 42b respectivement pour chaque calculateur.

Ainsi, le décodeur d'adresse de chaque calculateur permet de sélectionner chaque registre ou la mémoire de ce calculateur. Il permet aussi à chaque microcontrôleur d'inhiber le fonctionnement de n'importe quelle alimentation commutée (y compris la sienne) de manière à pouvoir travailler seul pendant un moment, si le calcul le justifie Ceci évite les rallumages systématiques et inutiles des autres microcontrôleurs, créant des parasites. Mais ce temps d'inhibition est de toute façon volontairement limité physiquement à la conception, ceci pour éviter qu'un microcontrôleur en mauvais état de fonctionnement décide de garder la main indéfiniment et donc qu'il risque de faire des erreurs. Grâce au décodeur d'adresses, le microcontrôleur sous tension peut aussi choisir le microcontrôleur qui va prendre la suite du travail et le moment où celui va se rallumer.

Chaque microcontrôleur peut également s'auto-inhiber.

Selon une réalisation particulière, les programmes des microcontrôleurs sont contenus dans des mémoires non représentées qui leurs sont propres. La mémoire commune 40a, 40b permet de préserver toutes les données importantes que les microcontrôleurs peuvent exploiter pour connaître l'état de l'historique des opérations en cours. Il est aussi possible d'utiliser cette mémoire 40a, 40b pour laisser une trace de la panne d'un microcontrôleur et permettre ainsi au microcontrôleur qui prend la suite d'empêcher la remise sous tension du précédent.

La mémoire commune 40a, 40b de chaque calculateur 2a, 2b est à cet effet, reliée au bus correspondant 22a, 22b.

On retrouve dans le schéma de la figure 4 également les moyens 8a et 8b dits "testeur de vie", ces moyens sont reliés au registre 36a, 36b de test du calculateur correspondant.

Le "testeur de vie" de chaque calculateur est chargé de déterminer si le microcontrôleur qui est sous tension est en état de fonctionnement. On peut considérer ce testeur comme une temporisation que le microcontrôleur sous tension doit sans arrêt relancer sous peine que le testeur en déduise que le microcontrôleur ne fonctionne plus et donc que le calculateur correspondant ne transmet pas de données justes. On peut considérer le "testeur de vie" comme un système "chien de garde" sans alimentation commutée.

Alors que chaque calculateur ou chaque branche de l'unité de calcul comporte son propre "testeur de vie" 8a, 8b, un unique testeur de cohérence 10 est prévu pour les deux calculateurs, dans le cas de l'exemple décrit. Le choix d'un unique testeur de cohérence est un choix purement arbitraire.

Le testeur de cohérence est un système chargé de faire une analyse élaborée de données venant d'un microcontrôleur sous tension de chaque calculateur. Par exemple, chaque microcontrôleur envoie au testeur un mot dont les bits de poids forts sont le résultat d'une transformation mathématique des bits de poids faibles (ou le contraire). Une unité logique simple vérifie alors si les transformations mathématiques ont bien été exécutées par le microcontrôleur. Plus le test est complexe et exécuté judicieusement, plus il est pertinent. De façon avantageuse le test peut être programmé dans plusieurs endroits différents du logiciel des microcontrôleurs car il arrive sous irradiation que certaines zones de mémoire soient détériorées alors que d'autres fonctionnent encore.

Les registres de données 34a, 34b sont reliés au comparateur 4 et au multiplexeur 5 pour leur transmettre les résultats des calculs. Le multiplexeur transmet, en fonction de commandes reçues du comparateur les résultats d'un des calculateurs vers un registre de sortie 6, qui lui-même les transmet à des actionneurs non représentés.

Si toutefois aucun calculateur n'est opérationnel, aucune information nouvelle n'est transmise aux actionneurs.

On a également prévu une alimentation générale 50 reliée aux différents éléments de l'unité de calcul par des moyens de connexion 51 représentés en trait mixte.

Dans le cas d'une unité de calcul embarquée, des interfaces 54a, 54b associées respectivement aux microcontrôleurs 20a, 20b, permettent aussi à ceux-ci d'échanger des informations par exemple avec une unité centrale non représentée par l'intermédiaire d'une ligne série 56 dite de communication avec le sol.

Le fonctionnement de l'unité de calcul peut se résumer comme suit :

Chaque microcontrôleur actif de chaque calculateur présente une donnée, dite "donnée votante", à vérifier sur son bus respectif. Ces données sont validées ensuite sur les registres de données 34a et 34b du comparateur 4, qui autorise le multiplexeur 5 à présenter une de ces données en sortie si elles sont identiques.

Dans le cas où les données votantes sont différentes, le comparateur fait appel à l'avis des testeurs de vie. Il ordonne ensuite au multiplexeur de présenter la donnée de celui qui rafraîchit son testeur de vie.

Si les deux testeurs de vie sont rafraîchis, le comparateur fait alors appel aux testeurs de cohérence. Il ordonne ensuite au multiplexeur de présenter la donnée de celui qui effectue correctement les opérations de test du testeur de cohérence.

Si le comparateur n'arrive pas à lever le doute, il garde la donnée précédente sur la sortie du multiplexeur tant qu'il n'y a pas accord des données qui lui sont présentées.

Selon un aspect avantageux de l'invention, chaque calculateur pouvant comporter une pluralité de microcontrôleurs fonctionne tour à tour, le comparateur attend la prochaine permutation de fonctionnement pour lever le doute et mettre à jour les données en sortie du multiplexeur.

Un fonctionnement de ce type est également illustré par exemple dans la demande de brevet FR-2 663 160 du 12 juin 1990 déposée par le demandeur.

Chaque "chien de garde" est prévu pour rallumer son microcontrôleur régulièrement. En fonctionnement normal, les deux microcontrôleurs actifs font le même travail et chacun inhibe les autres alimentations commutées de sa branche, de manière à pouvoir travailler sans être dérangé par des rallumages intempestifs des autres microcontrôleurs. Lorsque le microcontrôleur actif décide de passer la main à un autre, il lève l'inhibition de son "chien de garde" et le microcontrôleur choisi se rallume. Ce dernier est alors programmé pour aller chercher des informations que le microcontrôleur qui a "passé la main" a laissé dans la mémoire commune. Le microcontrôleur qui a "passé la main" se coupe en ne rafraîchissant plus son propre "chien de garde".

Si une panne fait qu'un microcontrôleur décide de garder la main indéfiniment, il sera tôt ou tard coupé par une temporisation maximale de son "chien de garde". Les autre "chiens de garde" ne sont alors plus inhibés et c'est le premier microcontrôleur qui se rallume qui "prend la main" (suivant une procédure qui empêche que deux microcontrôleurs ne prennent la main en même temps). Ce premier microcontrôleur va alors chercher le contexte dans la mémoire commune, respectivement 40a, 40b.

Finalement, grâce à l'invention, une unité de calcul peut être configurée selon une architecture à deux branches, et capable de fonctionner en milieu hostile en masquant les erreurs de fonctionnement de certains composants. L'unité de calcul est ainsi plus compacte et adaptée à une consommation électrique réduite. Son coût de fabrication est également réduit.

L'association de la présente invention avec celle qui fait l'objet de la demande de brevet précitée permet une meilleure tenue à la dose cumulée, qu'une association de cette même demande de brevet avec une architecture TMR ou autre, pour un nombre total de microcalculateurs moindre.

Par ailleurs, dans d'autres applications où l'encombrement et la consommation électrique ne posent pas de problème, il est bien sûr possible de configurer l'unité de calcul avec un nombre de calculateurs supérieur à deux. Dans ce cas, chaque calculateur relié au comparateur est équipé de moyens de contrôle de son bon fonctionnement, pour améliorer la fiabilité de l'unité.

## Revendications

1. Unité de calcul comportant au moins deux calculateurs (2a, 2b) redondants capables d'exécuter indépendamment des tâches de calcul identiques et de fournir chacun des données de calcul à un comparateur (4), et un multiplexeur (5), piloté par le comparateur (4), pour transmettre vers une sortie (6) les données de calcul d'au moins un des calculateurs (2a, 2b) lorsque le comparateur relève une identité des données de calcul provenant de chaque calculateur (2a, 2b), l'unité de calcul comporte en outre des moyens de contrôle du bon fonctionnement de chaque calculateur (8a, 8b, 10, 10a, 10b), le multiplexeur, lorsque le comparateur relève une différence dans les données de calcul provenant respectivement de chaque calculateur, étant capable de délivrer vers une sortie les données de calcul d'un calculateur dont le bon fonctionnement est vérifié par les moyens de contrôle, caractérisée en ce que chaque calculateur (2a, 2b) comporte une pluralité de microcontrôleurs (20a, 20b) fonctionnant tour à tour.

2. Unité de calcul selon la revendication 1, caractérisée en ce que les moyens de contrôle du bon fonctionnement comportent pour chaque calculateur (2a, 2b) un système (8a, 8b) dit "testeur de vie" pour vérifier si le calculateur (2a, 2b) est en état de fonctionnement et un système dit "testeur de cohérence" (10, 10a, 10b) pour analyser des données de calcul d'un traitement-test déterminé effectué par chaque calculateur.

3. Unité de calcul selon la revendication 1, caractérisée en ce que chaque microcontrôleur est équipé d'un système de surveillance (28a, 28b) capable de vérifier le fonctionnement du microcontrôleur et de couper l'alimentation du microcontrôleur en cas de panne de ce dernier.

4. Unité de calcul selon l'une quelconque des revendications précédentes, caractérisée en ce que chaque calculateur (2a, 2b) comporte un décodeur d'adresses (38a, 38b) pour sélectionner un registre (34a, 36a, 34b, 36b) et/ou une mémoire (40a, 40b) du calculateur.

5. Unité de calcul selon la revendication 4, caractérisée en ce que le décodeur d'adresses (38a, 38b) est en outre relié à chaque système de surveillance (28a, 28b) du calculateur pour inhiber le fonctionnement d'au moins un système de surveillance (28a, 28b) à la suite d'un ordre d'au moins l'un des microcontrôleurs (20a, 20b).

6. Unité de calcul selon l'une quelconque des revendications précédentes, caractérisée en ce que chaque microcontrôleur (20a, 20b) comporte une mémoire propre contenant son programme.

7. Unité de calcul, selon la revendication 6, caractérisée en ce que chaque calculateur (2a, 2b) comporte une mémoire (40a, 40b) commune à tous les microcontrôleurs (20a, 20b) pour préserver les données importantes du calcul et mémoriser un historique des opérations en cours.

## Patentansprüche

1. Rechenwerkeinheit mit wenigstens zwei redundanten Rechnern (2a, 2b), die unabhängig identische Rechenaufgaben ausführen können und von denen jeder Rechendaten an einen Komparator (4) liefert, und einem Multiplexer (5), gesteuert durch den Komparator (4), um die Rechendaten von wenigstens einem der Rechner (2a, 2b) an einen Ausgang (6) zu liefern, wenn der Komparator eine Identität der von jedem Rechner (2a, 2b) stammenden Rechendaten feststellt, wobei die Recheneinheit außerdem Kontrolleinrichtungen (8a, 8b, 10, 10a, 10b) für das richtige Funktionieren jedes Rechners umfaßt und der Multiplexer, wenn der Komparator eine Differenz bei den jeweils von jedem Rechner stammenden Daten feststellt, fähig ist, an einen Ausgang die Rechendaten eines Rechners zu liefert, dessen richtiges Funktionieren durch die Kontrolleinrichtungen überprüft wird, **dadurch gekennzeichnet,**
daß jeder Rechner (2a, 2b) eine Mehrzahl bzw. Vielzahl wechselweise arbeitender Mikrosteuerbausteine (20a, 20b) umfaßt.

2. Rechenwerk nach Anspruch 1, dadurch gekennzeichnet, daß die Kontrolleinrichtungen für das richtige Funktionieren jedes Rechners (2a, 2b) ein sogenanntes "Lebens-Tester"-System (8a, 8b) umfassen, um zu überprüfen, ob der Rechner (2a, 2b) im Betriebszustand ist, und ein sogenanntes "Kohärenz-Tester"-System (10, 10a, 10b), um die Rechendaten einer bestimmten, von jedem Rechner durchgeführten Test-Verarbeitung zu analysieren.

3. Rechenwerk nach Anspruch 1, dadurch gekennzeichnet, daß jeder Mikrosteuerbaustein mit einem Überwachungssystem (28a, 28b) ausgestattet ist, das fähig ist, den Betrieb des Mikrosteuerbausteins zu überprüfen und die Versorgung des Mikrosteuerbausteins im Falle eines Defekts dieses letzteren zu unterbrechen.

4. Rechenwerk nach einem der vorangehenden Ansprüche, dadurch gekennzeichnet, daß jeder Rechner (2a, 2b) einen Adressendecodierer (38a, 38b) zum Ansteuern eines Registers (34a, 36a, 34b, 36b) und/oder eines Speichers (40a, 40b) des Rechners umfaßt.

5. Rechenwerk nach Anspruch 4, dadurch gekennzeichnet, daß der Adressendecodierer (38a, 38b) außerdem mit jedem Überwachungssystem (28a, 28b) des Rechners verbunden ist, um als Folge eines Befehls von wenigstens einem der Mikrosteuerbausteine (20a, 20b) den Betrieb wenigstens eines Überwachungssystems (28a, 28b) zu sperren.

6. Rechenwerk nach einem der vorangehenden Ansprüche, dadurch gekennzeichnet, daß jeder Mikrosteuerbaustein (20a, 20b) einen eigenen Speicher umfaßt, der sein Programm enthält.

7. Rechenwerk nach Anspruch 6, dadurch gekennzeichnet, daß jeder Rechner (2a, 2b) einen allen Mikrosteuerbausteinen (20a, 20b) gemeinsamen Speicher (40a, 40b) umfaßt, um die wichtigen Rechendaten aufzubewahren und einen chronologischen Überblick der laufenden Operationen aufzuzeichnen.

## Claims

1. Computing unit having two redundant computers (2a, 2b) able to independently perform identical computing tasks and in each case supply computing data to a comparator (4), and a multiplexer (5) controlled by the comparator (4) in order to transmit to an output (6) the computing data of at least one of the computers (2a, 2b) when the comparator detects an identity of the computing data from each computer (2a, 2b), the computing unit also having means for controlling for checking the satisfactory operation of each computer (8a, 8b, 10a, 10b), the multiplexer, when the comparator detects a difference in the computing results coming respectively from each computer being able to supply to an output the computing data of a computer, whose satisfactory operation is verified by the control means, characterized in that each computer (2a, 2b) has a plurality of microcontrollers (20a, 20b) operating in turn.

2. Computing unit according to claim 1, characterized in that the means for checking the satisfactory operation comprise for each computer (2a, 2b) a so-called "life tester" system (8a, 8b) to establish whether the computer (2a, 2b) is in an operating state and a so-called "consistency tester" system (10, 10a, 10b) to analyze the computing data of a given test processing performed by each computer.

3. Computing unit according to claim 1, characterized in that each microcontroller is equipped with a monitoring system (28a, 28b) able to establish the operation of the microcontroller and disconnect the power supply of the microcontroller in the case of a breakdown thereof.

4. Computing unit according to any one of the preceding claims, characterized in that each computer (2a, 2b) has an address decoder (38a, 38b) for selecting a register (34a, 36a, 34b, 36b) and/or a memory (40a, 40b) of the computer.

5. Computing unit according to claim 4, characterized in that the address decoder (38a, 38b) is also connected to each monitoring system (28a, 28b) of the computer in order to inhibit the operation of at least one monitoring system (28a, 28b) as a result of an order from at least one of the microcontrollers (20a, 20b).

6. Computing unit according to any one of the preceding claims, characterized in that each microcontroller (20a, 20b) has its own memory containing its programme.

7. Computing unit according to claim 6, characterized in that each computer (2a, 2b) has a memory (40a, 40b) common to all the microcontrollers (20a, 20b) in order to preserve important data of the calculation and store background of the operations taking place.
